# EUROPEAN PATENT SPECIFICATION

(11) **EP 1 015 392 B1**
(45) Date of publication and mention of the grant of the patent: **04.12.2002**
(21) Application number: 98940671.5
(22) Date of filing: 18.08.1998
(51) Int. Cl.: C02F 11/12, A01D 33/08, A01C 3/00

(54) **METHOD AND DEVICE FOR SEPARATING SLUDGE-LIKE MATERIAL USING A STREAM OF FINELY DIVIDED AIR BUBBLES**
VERFAHREN UND VORRICHTUNG ZUR TRENNUNG VON SCHLAMMARTIGEN MATERIALEN MITTELS EINER FEINBLASIGEN BELÜFTUNG
PROCEDE ET DISPOSITIF DE SEPARATION DE MATIERE ANALOGUE A LA BOUE

(30) Priority: 18.08.1997 NL 1006789
(43) Date of publication of application: 05.07.2000
(73) Proprietor: Agrifirm B.V., 7941 AS Meppel (NL)
(72) Inventor: BLEEKER, Jan, Jacobus, 1606 CS Venhuizen (NL)
(74) Representative: Jorritsma, Ruurd
(86) International application number: PCT/NL98/00467
(87) International publication number: WO 99/008968

(56) References cited:
- US-A- 2 426 398
- US-A- 4 576 719
- PATENT ABSTRACTS OF JAPAN vol. 006, no. 180 (C-125), 14 September 1982 & JP 57 094388 A (HITACHI LTD), 11 June 1982

## Description

### Background of the Invention

### 1. Field of the Invention

The present invention is broadly concerned with finely divided nanoscale composite materials which have significant utility in the destruction of chlorocarbons, fluorocarbons and other toxic or undesirable fluids. More particularly, the invention pertains to composite materials including first metal oxide particles, preferably MgO, at least partially coated with an extremely thin layer of a second metal oxide such as e.g. Fe₂O₃. Composites in accordance with the invention have greatly enhanced abilities to destructively adsorb undesirable fluids such as gases or liquids.

### 2. Description of the Prior Art

The increasing amounts of chlorocarbons and chlorofluorocarbons in the environment has given rise to the need to find easy and effective ways to destroy these gases without producing toxic byproducts. The most widespread groups of chlorinated compounds are the polychlorinated biphenyls (PCBs) which have extremely high thermal stabilities and are used as lubricants, heat transfer fluids, plasticizers, and transformer fluids; and cleaning solvents such as CCl₄, CHCl₃, and C₂Cl₄. Additionally, large stores of obsolete or overaged pesticides, herbicides, mixed wastes and nerve gases exist around the world, and the safe and effective destruction of these materials is of increasing concern.

These considerations have prompted a number of investigations to determine the most feasible way of handling and destroying various undesirable substances. Some of these destructive techniques involve incineration or catalytic oxidation. Another approach depends on surface active reagents that strip heteroatoms from the toxic gases and allow only the release of non-toxic hydrocarbons or carbon oxides. For example, the destructive adsorption of organophosphorus compounds on MgO causes the phosphorus atoms to be immobilized as a strongly bound residue, with the only volatile organic products being CH₃OH and HCOOH. This same chemistry has been applied to the destruction of chlorocarbons using reactants such as MgO or CaO.

While destructive adsorption techniques appear promising and have favorable thermodynamics, the cost thereof has been considerable, owing principally to the fact that, to be effective, the adsorptive reagents must be yery finely divided for maximum surface area. Moreover, these reactions are non-catalytic and depend entirely upon molecular reactions at the surface of the reagents.

US 5,053,379 discloses a nickel type catalyst which comprises a carrier compound of magnesia and a metallic nickel or nickel oxide dispersed on the surface of the carrier. The catalyst is said to exhibit a high activity in the steam reforming of hydrocarbons, methanation of synthesis gases, and hydrogenation of cyclic and alicyclic unsaturated hydrocarbons.

US 4,360,504 discloses a catalyst for destruction of trace components in off-gas. The catalyst contains copper oxide and/or iron oxide which may be supported on a ceramic oxide carrier. The catalyst is employed in the form of pills, extrudates, rings or beads which typically have diameters of several millimetres.

This is accordingly a real and unsatisfied need in the art for improved destructive adsorption reagents which have enhanced destructive efficiencies.

### Summary of the Invention

The present invention overcomes the problems outlined above and provides finely divided composite materials useful for the destructive adsorption of a wide variety of undesirable fluids (i.e., materials in either gaseous or liquid form), such as chlorocarbons, chlorofluorocarbons, polychlorinated biphenyls, pesticides, herbicides, mixed wastes and nerve gases. Broadly speaking, the composites of the invention comprise finely divided particles of a first metal oxide selected from the group consisting of MgO, CaO, Al₂O₃, SnO₂, TiO₂, and mixtures thereof, these particles being at least partially coated with a quantity of a second metal oxide selected from the group consisting of Fe₂O₃, Cu₂O, CoO and mixtures thereof.

The composite material has an average particle size of up to 21 nm and an average surface area of at least 100 m²/g.

In preferred forms, the first metal oxide is advantageously selected from the group consisting of MgO and CaO, whereas the second oxide is preferably Fe₂O₃. For most efficient usages, the particles of the first metal oxide should be single crystallites or polycrystallite aggregations and should have an average size of up to about 20 nm, and more preferably from about 4-10 nm; the second metal oxide should be in the form of an extremely thin layer or coating applied onto the surface of the first metal oxide, giving an average overall size for the composite of up to 21 nm, and more preferably from about 5-11 nm. The bulk composites of the invention preferably have an average surface area from about 300-500 m²/g.

Generally, the first metal oxide should be present in substantial excess relative to the second oxide. Thus, the first metal oxide comprises from about 90-99% by weight of the total composite material, and more preferably from about 95-99% by weight. Correspondingly, the second metal oxide should comprise from about 1-10% by weight of the total composite, and more preferably from about 1-5% by weight. The coverage of the first oxide by the second oxide should be quite extensive, e.g., at least about 75% of the surface area of the first metal oxide particles should be covered with the second oxide, and more preferably from about 90-100% of this surface area should be covered.

The composites of the invention are preferably fabricated by first forming the very finely divided first particulate material using known aerogel techniques. Thereafter, the second material is applied onto the surface of the first oxide as an extremely thin layer, e.g., a monolayer having a thickness on the order of less than 1 nm. For example, MgO nanoscale particles can be prepared, and are then treated with an iron salt such as iron III (acetylacetonate)₃ with the ligands being driven off by heating.

The composites of the invention can be used for the destruction of unwanted fluids, especially gases in a gas stream, although the invention is not limited to destruction of gases. The method may involve passing a fluid stream through a filtering device including the composite material therein. In practice, the concentration of the unwanted fluids should be from about 0.3-1.3 g of the unwanted fluids for each gram of the composite material used for destructive adsorption. Generally, to be effective, the composites hereof should be heated during contact with the fluids to be destructively adsorbed. This elevated temperature should be at least about 300°C, and more preferably from about 400-600°C, in the case of materials such as the chlorocarbons, fluorocarbons and nerve gases. In order to destructively adsorb other materials such as the PCBs, higher temperatures may be required on the order of 600-800°C.

Although not wishing to be bound by any theory, it is believed that the second or outer oxide plays a catalytic role in the destructive adsorption process, via a mechanism referred to as spillover catalysis. For example, when CCl₄ attacks the surface of an MgO/Fe₂O₃ composite, it is believed that a disassociative adsorption occurs, probably with the intermediacy of chemisorbed CCl₂. At this point, COCl₂ may form as an intermediate which goes on to react in a similar mode to produce CO₂ and FeClₓ. However, the important point is that the FeClₓ formed must quickly exchange (spillover) Cl⁻ with O²⁻ in such a way that Cl⁻ is driven into the bulk of the first oxide while O²⁻ comes to the surface.

### Brief Description of the Drawings

Figure 1 is a schematic representation of the apparatus used in the production of Fe₂O₃/MgO composites of the invention;
Fig. 2 is a schematic representation of apparatus used in the chlorocarbon decomposition tests using the composites of the invention;
Fig. 3 is the infrared spectra of the gaseous products of CCl₄ reacted with MgO (Graph a) and Fe₂O₃/MgO (Graph b), at a sample/CCl₄ molar ratio of 3:1;
Fig. 4 is the infrared spectra of the gaseous products of CCl₄ reacted with MgO (Graph a) and Fe₂O₃/MgO (Graph b), at a sample/CCl₄ molar ratio of 6:1;
Fig. 5 is the infrared spectra of the gaseous products of CCl₄ reacted with MgO (Graph a) and Fe₂O₃/MgO (Graph b), at a sample/CCl₄ molar ratio of 10:1;
Fig. 6 is the infrared spectra of the gaseous products of CCl₄ reacted with MgO (Graph a) and Fe₂O₃/MgO (Graph b), at a sample/CCl₄ molar ratio of 13:1;
Fig. 7 is a gas chromatograph plot illustrating the percentage composition of gaseous products from the reaction between 0.1 g MgO and CCl₄ with respect to the microliters CCl₄ injected at 400°C sample temperature; and
Fig. 8 is a gas chromatograph plot illustrating the percentage composition of gaseous products from the reaction between 0.1 g Fe₂O₃/MgO and CCl₄ with respect to the microliters CCl₄ injected at 400°C sample temperature.

### Detailed Description of the Preferred Embodiments

The following examples illustrate preferred embodiments of the invention and use thereof. It is to be understood, however, that these examples are presented by way of illustration only and nothing therein should be taken as a limitation upon the overall scope of the invention.

### Example 1

### A. Preparation of MgO

Highly divided nanoscale MgO samples were prepared by the autoclave treatment described by Utamapanya et al., Chem. Mater., **3**:175-181 (1991). In this procedure, 10% by weight magnesium methoxide in methanol solution was prepared and 83% by weight toluene solvent was added. The solution was then hydrolyzed by addition of 0.75% by weight water dropwise while the solution was stirred and covered with aluminum foil to avoid evaporation. To insure completion of the reaction, the mixture was stirred overnight. This produced an aerogel which was treated in an autoclave in using a glass lined 600 ml capacity Parr miniature reactor. The gel solution was placed within the reactor and flushed for 10 minutes with nitrogen gas, whereupon the reactor was closed and pressurized to 689.5 kPa (100 psi) using the nitrogen gas. The reactor was then heated up to 265°C over a 4 hour period at a heating rate of 1°C/min. The temperature was then allowed to equilibrate at 265°C for 10 minutes.

At this point, the reactor was vented to release the pressure and vent the solvent (final reactor pressure was about 4.8 MPa (700 psi)). Finally, the reactor was flushed with nitrogen gas for 10 minutes. This produced fine white powdery magnesium hydroxide having a surface area on the order of 1000 m²/g which was then thermally converted to MgO as explained below.

### B. Preparation of Fe₂O₃/MgO Composites

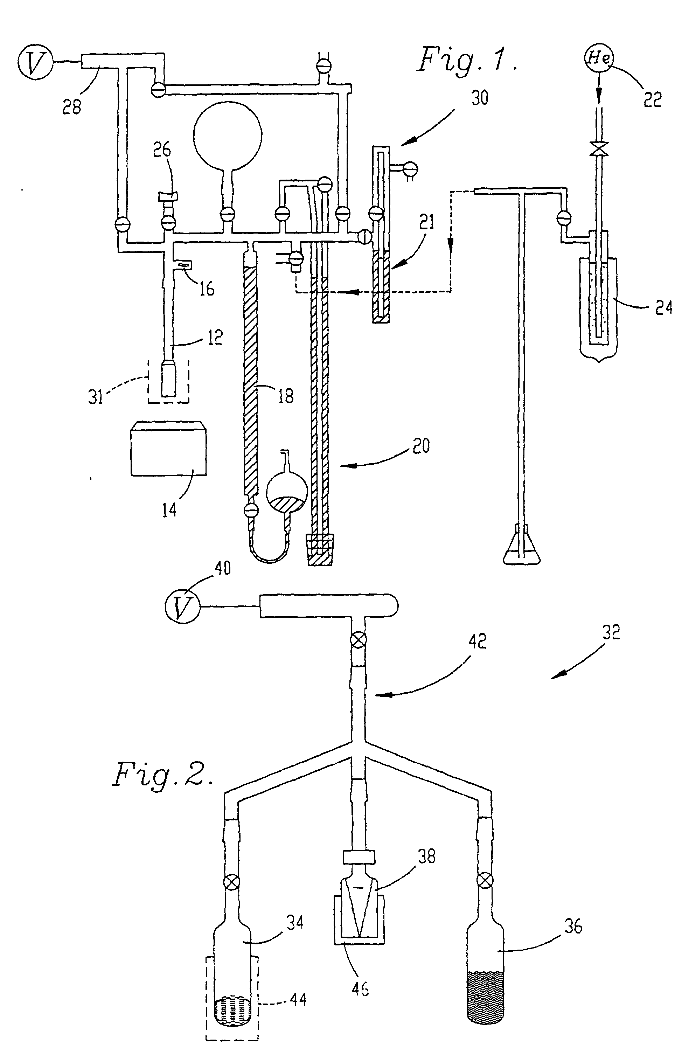

The Mg(OH)₂ particles were first thermally converted to MgO, followed by deposition of iron oxide to provide the complete composite. The apparatus employed for this operation is set forth in Fig. 1. This apparatus 10 includes a reactor 12 for holding a quantity of the powdered magnesium hydroxide, with a shiftable magnetic stirrer 14 positioned below the reactor and operable to rotate a stirrer bar 16. The apparatus further includes a mercury-filled 50 ml gas burette 18, manometers 20 and 21, a helium source 22 coupled with a molecular sieve 13X trap 24, and a septa 26 operably coupled with reactor 12. A vacuum line 28 is also provided which is coupled via conduit and valve assembly 30 to the remainder of the apparatus 10 as shown. Also, the reaction 12 is equipped with an external, electrically controlled heater 31.

The initial thermal conversion of magnesium hydroxide to MgO was carried out by heating the magnesium hydroxide in reactor 12 under dynamic vacuum conditions at an ascending temperature rate to a maximum temperature of 500°C, which was held for 6 hours. Most of the dehydration was found to occur at temperatures between 200°C and 320°C. IR and X-ray diffraction studies confirmed virtually complete conversion of the Mg(OH)₂ to MgO.

Iron oxide was deposited on the nanoscale MgO particles by carrying out a direct reaction between activated MgO and iron III (acetylacetonate)₃, in tetrahydrofuran at room temperature under helium (1 atm.).

In a typical preparation, 0.3 g of Mg(OH)₂ was heated under vacuum 0.13 Pa (10⁻³ Torr.) in the reactor 12 at an ascending temperature rate of 1°C/min. to 500°C, which was held for 6 hours to assure complete conversion to MgO, followed by cooling to room temperature.

The evacuated system was then filled with He at 1 atm. pressure, and stirring was commenced using stirrer 14 and bar 16, the latter being magnetically shifted to the bottom of reactor 12. Two ml of 0.25 M iron III (acetylacetonate)₃ in THF solution (previously prepared under argon by dissolving 4.5 g of iron III (acetylacetonate)₃ in 50 ml THF) was introduced to the reactor 12 by a syringe through a septa 26. The amount of iron III (acetylacetonate)₃ solution used provided the MgO surfaces with 1.4 iron III (acetylacetonate)₃ molecules for each surface OH group. The concentration of surface OH groups for the autoclave-prepared MgO was found to be 3.6 OH groups/nm². The reaction mixture in reactor 12 was stirred overnight to allow a complete reaction at room temperature. The reacted Fe₂O₃/MgO composite was then removed from the reactor 12, filtered using regular filter paper, washed with THF to remove any residuals of iron III (acetylacetonate)₃, and dried in air for 10 minutes.

IR spectra of the resultant dried product showed bands for the acetylacetonate species, indicating the existence of some acetylacetonate ligands bound to the surfaces of the MgO. This product was heated again under vacuum 0.13 Pa (10⁻³ Torr.) at 500 °C to remove these ligands.

### C. Chlorocarbon Decomposition Using MgO and the Fe₂O₃/MgO Composite

Two different studies were carried out to investigate and compare the efficiency of activated MgO and Fe₂O₃/MgO samples in decomposing CCl₄. Previous investigations using CaO for CCl₄ destruction indicated that the best decomposition occurs at 400°C. Therefore, in the following two systems, the reaction temperature was 400°C.

In the first IR and XRD (X-Ray Diffraction) study, the apparatus of Fig. 2 was employed. This apparatus 32 included two Schlenk tubes 34, 36 respectively containing the MgO or Fe₂O₃/MgO composite and dry CCl₄, a calibrated 0.1 ml vial 38 and a vacuum source 40. A conduit and valve assembly 42 interconnected the source 40 with the tubes 34, 36 and vial 38 as shown. Also, tube 34 and vial 38 were equipped with external liquid nitrogen immersion containers 44, 46 for selective cooling of the contents of the tube 34 and vial 38.

In test procedures, the MgO or Fe₂O₃/MgO was heated by means not shown in Fig. 2 under vacuum 0.13 Pa (10⁻³ Torr.) for complete activation (3 hours for a 0.2 g sample), with the CCl₄ vessel remaining closed via the appropriate valve. Next, 0.1 ml CCl₄ was collected in the calibrated vial 38 using external cooling via liquid nitrogen container 46, and by opening the valve adjacent the tube 36. After the CCl₄ was collected in vial 38, and tube 34 had sufficiently cooled, the external liquid nitrogen container 44 was employed to further cool the contents of tube 34, and the valve adjacent tube 34 was opened. This resulted in transfer of the CCl₄ from vial 38 to tube 34 (the above steps were repeated when more than 0.1 ml of CCl₄ was needed). In practice, different molar ratios of MgO or Fe₂O₃/MgO to CCl₄ were reacted for subsequent testing.

The tube 34 containing the MgO or Fe₂O₃/MgO and the added CCl₄ was closed and heated at 400°C for 9 hours. Next, the CCl₄ tube 36 was replaced by an IR gas cell with KBr windows, followed by evacuation 0.13 Pa (10⁻³ Torr.) of the system with the valve associated with tube 34 still closed. The tube 34 was then opened by opening the adjacent valve, in order to transfer the gases produced from the reaction to the IR cell. After each such experiment, an IR spectrum was recorded for the gaseous product, and an XRD spectrum was recorded for the solid products.

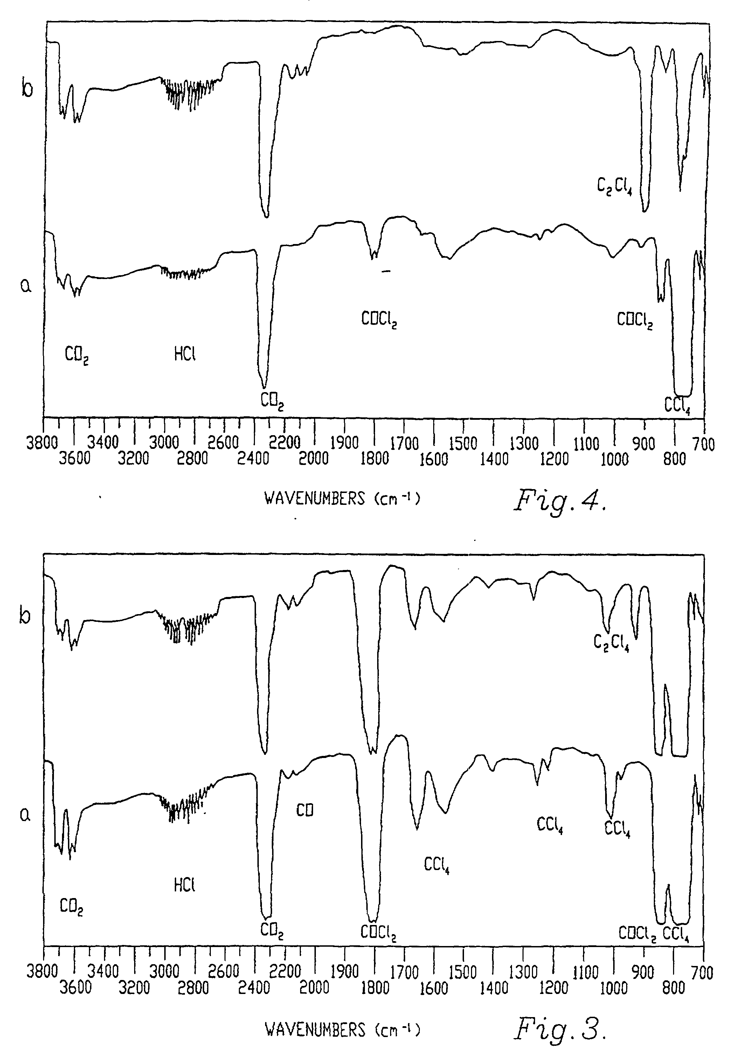

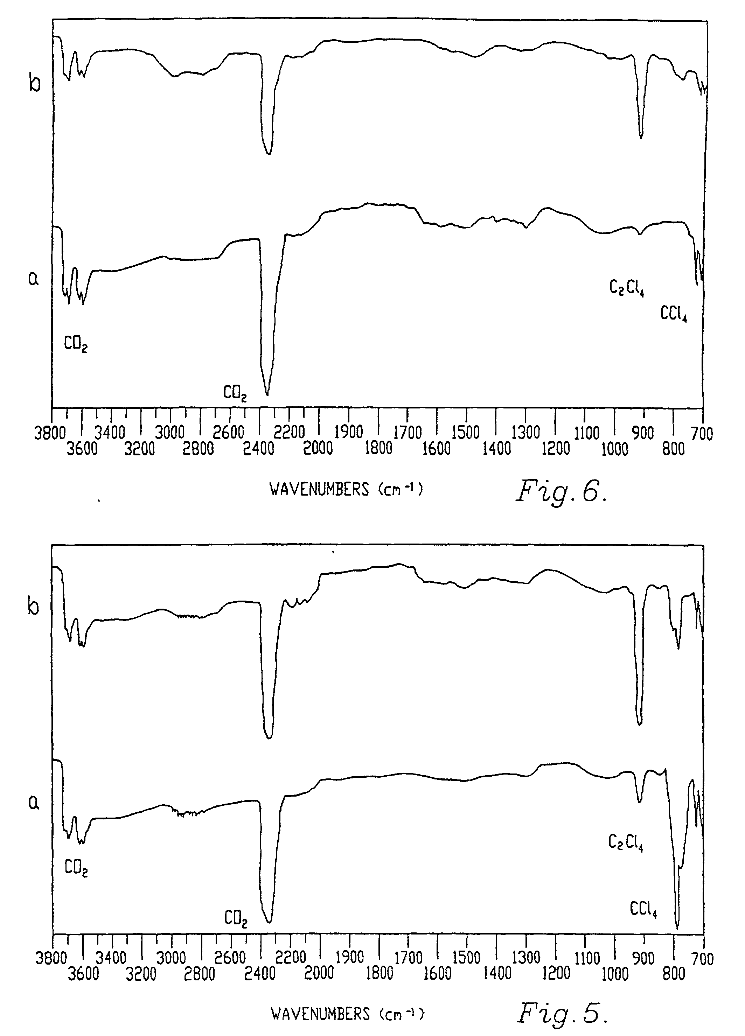

IR spectra of the gaseous products showed bands for CO₂, C₂Cl₄, COCl₂, CCl₄, and weak bands for HCl and CO gases (Figs. 3-6). As indicated from the band intensities, the composition of these products changes as the sample/CCl₄ ratio changes. At low sample CCl₄ molar ratio 3:1), all of these gases are produced. As the ratio increases, the sample becomes in excess and decomposes all of the CCl₄ and the intermediate products, COCl₂ and HCl. Comparing the spectra of the MgO and Fe₂O₃/MgO reaction products, the following results are manifest.
1. The disappearance of COCl₂ (phosgene) in the case of Fe₂O₃/MgO was faster than in the case of MgO (Fig. 4) as the ratio was increased, which means that Fe₂O₃/MgO produces less phosgene at all ratios.
2. The production of C₂Cl₄ was generally higher in the reaction of Fe₂O₃/MgO.
3. The most striking feature was that the remaining (undecomposed) CCl₄ was less in reaction of Fe₂O₃/MgO as shown by the less intense bands of CCl₄ in the case of Fe₂O₃/MgO at all ratios, especially at ratios of 6:1 and 10:1.

These confirm that Fe₂O₃ composites are more efficient for destruction of CCl₄, in terms of decomposing more CCl₄, and producing less COCl₂ gas.

The X-Ray diffraction spectra of the solid products showed patterns for MgCl₂, hydrated MgCl₂ and MgO. The hydration of some MgCl₂ was due to the exposure of the samples to air during the XRD experiments. Comparing the spectra of the reaction products of the Fe₂O₃/MgO composite systems with the reaction products of the MgO systems, it was determined that:
1. At low molar ratios (3:1 and 6:1), MgO is a major component in the reaction products of the MgO systems, while it disappears almost completely in the reaction products of the Fe₂O₃/MgO systems.
2. Fe₂O₃/MgO systems produce more MgCl₂ than do the MgO systems, as shown by the stronger patterns of MgCl₂ in the spectra of the Fe₂O₃/MgO systems.
3. Thus, more CCl₄ reacted with the Fe₂O₃/MgO composites, as compared with the same amount of MgO, thereby confirming the greater efficiency of the Fe₂O₃/MgO composites.

In a second GC (gas chromatography) study, the gases produced from the rapid reaction between a series of 1 µL injections (2 min. apart) of CCl₄ through 0.1 g of MgO or Fe₂O₃/MgO composite at 400°C. For this test, a 0.1 g sample of MgO or Fe₂O₃/MgO composite was packed in a U-shaped stainless steel reactor using glass wool and glass beads on other side or the sample to hold it in place. The reactor was connected to the column of a GC instrument (TCD GC Series 580, GOW-MAC Instrument Co.), and heated to 400°C over 1 hour. The instrument was calibrated at a column and injector temperature of 100°C. He was used as a carrier gas at a flow rate of 0.5 cm/s. CCl₄ was injected in 1 µL portions over the heated sample and the results were recorded after each injection for the gases coming out of the reaction tube.

The main gaseous products detected were CO₂, C₂Cl₄ and unreacted CCl₄, as identified by a mass spectrometer connected to the GC instrument. Gas chromatography was used to study the gaseous products of a short duration reaction between 0.1 g of MgO or Fe₂O₃/MgO and a series of 1 µL portions of CCl₄ injected over the sample at 400°C allowing 2 minutes between injections. The main gaseous products detected were CO₂, C₂Cl₄, and the unreacted CCl₄ as identified by a mass spectrometer connected with a GC instrument in a separate system.

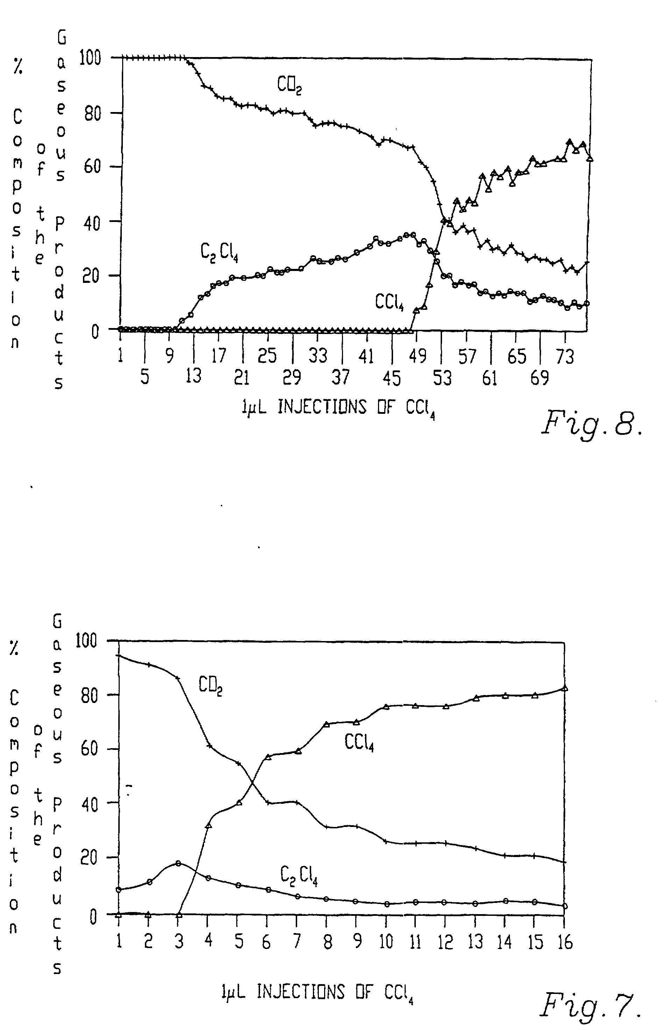

Generally, CO₂ gas was the major product along with traces of C₂Cl₄ in the first few CCl₄ injections. After a certain number of injections, CCl₄ became in excess and started to appear with the reaction products. The concentration of CCl₄ increased slowly with injections of more CCl₄ until the sample was saturated and unable to decompose more CCl₄, as shown in Figs. 7-8. As more CCl₄ was injected, the CO₂ and C₂Cl₄ production decreased but they continued to form after the saturation of the sample, which indicated that some decomposition continued to take place under these conditions. The results of two typical experiments using MgO and Fe₂O₃/MgO samples were illustrated in Figs. 7 and 8, where the percent composition of the gaseous products is plotted with respect to the amount of CCl₄ injected. The percentage of each gas was measured by the percentage of its peak height after each injection.

The number of injections in which CCl₄ did not appear with the products gives the amount of CCl₄ completely decomposed by a 0.1 g sample. The efficiency of Fe₂O₃/MgO composites in decomposing CCl₄ was compared with that of MgO by carrying out the reaction with CCl₄ on the same amount of both samples (0.1 g) under the same conditions. In all of the experiments carried out, the difference in the behavior of both samples toward CCl₄ was great. In the MgO reaction (Fig. 7), CCl₄ was completely decomposed in the first 3 injections and the sample was saturated with 15 µL of CCl₄. In contrast, the Fe₂O₃/MgO sample was saturated with 75 µL of CCl₄ and 49 µL were completely decomposed. Depending on these results the sample/CCl₄ molar ratio for complete CCl₄ decomposition was 80:1 and 5:1 for MgO and Fe₂O₃/MgO respectively. In other words, to decompose 1 mole of CCl₄, we need 80 moles of MgO or 5 moles of Fe₂O₃/MgO. Another difference was that C₂Cl₄ was not produced from the first 10 injections in the Fe₂O₃/MgO system and CO₂ was the only product, while it was produced from the first injection in the MgO reaction. This confirms that the Fe₂O₃/MgO composites are very much more efficient in terms of decomposing CCl₄ and producing more CO₂, as compared with MgO.

### D. Effect of Iron Content

The GC apparatus was also used to determine the effect of varying the iron content in the Fe₂O₃/MgO composites insofar as CCl₄ destruction is concerned. It was determined that the amount of iron deposited on the MgO surface increased the efficiency of the composites. Table 1 sets forth the amount of CCl₄ completely decomposed by Fe₂O₃/MgO composites having differing amounts of iron, where the GC experiments were carried out as set forth above.

**Table 1**

| %Fe (by weight) | µL of CCl₄ Completely Decomposed |
|---|---|
| 0 | 3 |
| 1.7 | 21 |
| 2.1 | 38 |
| 2.2 | 49 |

### E. Effect of Other Reactants

The preferred Fe₂O₃/MgO composites were compared with other related samples by GC testing as described above. The other samples were: MgO mixed with iron III (acetylacetonate)₃ using different amounts of iron; MgO mixed with α-Fe₂O₃ using different amounts of iron; straight α-Fe₂O₃; and straight iron III (acetylacetonate)₃. Table 2 below sets forth the amounts of CCl₄ (in µL) completely decomposed by 0.1 g of different samples at 400°C.

**Table 2**

| Sample % Fe | 0% | 1.7 % | 2.1 % | 2.2 % | 2.5 % | 5.0 % |
|---|---|---|---|---|---|---|
| Fe₂O₃/MgO | 3 | 21 | 38 | 49 | - | - |
| MgO/Fe(acac)₃ | 3 | - | - | 24 | - | 23 |
| MgO/α-Fe₂O₃¹ | 3 | - | - | - | 5 | - |
| α-Fe₂O₃ | 11 | | | | | |
| Fe(acac)₃ | 13 | | | | | |

| | | | | | | |
|---|---|---|---|---|---|---|
| ¹A physical mixture of separate MgO and α-Fe₂O₃ particles. | | | | | | |

### F. The Effect of Time Between Injections

The time between CCl₄ 1 µL injections in the GC test described above was found to have a significant influence on the efficiency of the Fe₂O₃/MgO composite samples in reacting with CCl₄. The results of this series of experiments, carried out using different time periods between CCl₄ injections, but with all other conditions constant, is set forth in Table 3.

**Table 3**

| Time (minutes) | µL of CCl₄ Completely Decomposed | |
|---|---|---|
| | Sample A* | Sample B* |
| 2 | 24 | 30 |
| 5 | 40 | - |
| 10 | - | 60 |

| | | |
|---|---|---|
| *A and B are typical Fe₂O₃/MgO samples | | |

The significant increase in the reactivity of Fe₂O₃/MgO toward CCl₄ by increasing the time between CCl₄ injections indicates that longer times help the sample to regenerate it surface structure and potential. This means that Cl/O exchange process goes toward completion if longer time is allowed. Based on these tests, the described spillover catalysis mechanism is proposed. When short time intervals between CCl₄ injections were used, two things might happen to inhibit the Cl/O exchange: first, the Fe-Cl/Fe-O exchange may not occur for all of the surface Fe-Cl bonds. Second, the exchange process would be expected to start with oxygen ions in the outer layers of MgO particles, which will be blocked with Cl ions after a short time, covering the bulk oxygen ions. When longer time intervals were used, these problems were somewhat alleviated: first, enough time was allowed for a complete Fe-Cl/Fe-O exchange on the surface; second, the Cl ions accumulating in the outer layers migrate over time, uncovering more O⁻² ions for the exchange process.

### Example 2

In this example, a CaO/Fe₂O₃ composite was prepared and tested for its ability to destructively adsorb chlorocarbons. The apparatus employed was identical to that shown in Fig. 1. Commercially available Ca(OH)₂ was first thermally activated to CaO under the dynamic vacuum and heating conditions recited in Example 1 to yield CaO having a surface area of about 100-120 m²/g. The CaO was then stirred for several hours in a tetrahydrofuran solution of iron III (acetylacetonate)₃ under argon at the conditions of Example 1. The THF was then removed under vacuum, leaving an orange solid. This solid was heat treated again to 500°C to drive off the acetylacetonate ligands. A gray/black powder resulted due to the carbon present. The composite was then stored and handled in a dry box to prevent reaction with moisture. X-ray diffraction studies of the sample detected from the atmosphere showed only the presence of CaO.

The CaO/Fe₂O₃ composite was tested for destructive adsorption of CCl₄ and found to be very efficient for this purpose.

## Claims

1. A composite material comprising particles of a first metal oxide selected from the group consisting of MgO, CaO, Al₂O₃, SnO₂, TiO₂ and mixtures thereof, said particles being at least partially coated with a quantity of a second metal oxide selected from the group consisting of Fe₂O₃, Cu₂O, CoO and mixtures thereof, said composite having an average particle size of up to 21 nm and average surface area of at least 100 m²/g.

2. The composite material of claim 1, said particles having an average size of up to 20 nm.

3. The composite material of claim 2, said average size being from 4-10 nm.

4. The composite material of claim 1, wherein at least 75% of the surface area of said first metal oxide particles are coated with the second metal oxide.

5. The composite material of claim 1, said average surface area being from 300-500 m²/g.

6. The composite material of claim 1, said first metal oxide comprising from 90-99% by weight of the total composite material.

7. The composite material of claim 6, said first metal oxide comprising from 95-99% by weight of the total composite material.

8. The composite material of claim 1, said second metal oxide comprising from 1-10% by weight of the total composite material.

9. The composite material of claim 8, said second metal oxide comprising from 1-5% by weight of the total composite material.

10. The composite material of claim 1, said first metal oxide being MgO, and said second metal oxide being Fe₂O₃.

11. The composite material of claim 1, said second metal oxide being applied as a thin layer having a thickness of up to 1 nm.

12. The composite material of claim 1, said second metal oxide consisting essentially of Fe₂O₃.

13. A method of destroying unwanted fluids in a fluid stream, comprising the step of contacting said fluid stream with a quantity of a composite material comprising particles of a first metal oxide selected from the group consisting of MgO, CaO, Al₂O₃, SnO₂, TiO₂ and mixtures thereof, said particles being at least partially coated with a quantity of a second metal oxide selected from the group consisting of Fe₂O₃, Cu₂O, CoO and mixtures thereof, said composite having an average particle size of up to 21 nm and an average surface area of at least 100 m²/g.

14. The method of claim 13, said unwanted fluid being selected from the group consisting of chlorocarbons, chlorofluorocarbons, toxic heteroatom compounds and mixtures thereof.

15. The method of claim 13, the concentration of said unwanted gases being from 0.30 g to 1.3 g for each gram of said composite material.

16. The method of claim 13, including the step of heating said composite material prior to said contacting step.

17. The method of claim 16, wherein said composite material is heated to a temperature of at least 100°C.

18. The method of claim 13, said contacting step comprising the step of passing said fluid stream through a filtering device, said filtering device including said composite material therein.

19. The method of claim 13, said particles having an average size of up to 20 nm.

20. The method of claim 19, said average size being from 4-10 nm.

21. The method of claim 13, said average surface area being from 300-500 m²/g.

22. The method of claim 13, said first metal oxide comprising from 90-99% by weight of the total composite material.

23. The method of claim 22, said first metal oxide comprising from 95-99% by weight of the total composite material.

24. The method of claim 13, said second metal oxide comprising from 1-10% by weight of the total composite material.

25. The method of claim 24, said second metal oxide comprising from 1-5% by weight of the total composite material.

26. The method of claim 13, said first metal oxide being MgO, and said second metal oxide being Fe₂O₃.

27. The method of claim 13, wherein at least 75% of the surface area of said first metal oxide particles are coated with the second metal oxide.

## Patentansprüche

1. Kompositmaterial, das Partikel eines ersten Metalloxids enthält, welches aus der aus MgO, CaO, Al₂O₃, SnO₂, TiO₂ und Mischungen davon bestehenden Gruppe ausgewählt ist, wobei die Partikel mindestens teilweise mit einer Menge eines zweiten Metalloxids beschichtet sind, das aus der aus Fe₂O₃, Cu₂O, CoO und Mischungen davon bestehenden Gruppe ausgewählt ist, wobei das Komposit eine durchschnittliche Partikelgröße von bis zu 21 nm und eine durchschnittliche Oberfläche von mindestens 100 m²/g aufweist.

2. Kompositmaterial nach Anspruch 1, bei dem die Partikel eine durchschnittliche Größe von bis zu 20 nm haben.

3. Kompositmaterial nach Anspruch 2, bei dem die durchschnittliche Größe von 4 bis 10 nm beträgt.

4. Kompositmaterial nach Anspruch 1, bei dem mindestens 75 % der Oberfläche der ersten Metalloxidpartikel mit dem zweiten Metalloxid beschichtet sind.

5. Kompositmaterial nach Anspruch 1, bei dem die durchschnittliche Oberfläche von 300 bis 500 m²/g beträgt.

6. Kompositmaterial nach Anspruch 1, bei dem das erste Metalloxid von 90 bis 99 Gew.-% des gesamten Kompositmaterials ausmacht.

7. Kompositmaterial nach Anspruch 6, bei dem das erste Metalloxid von 95 bis 99 Gew.-% des gesamten Kompositmaterials ausmacht.

8. Kompositmaterial nach Anspruch 1, bei dem das zweite Metalloxid von 1 bis 10 Gew.-% des gesamten Kompositmaterials ausmacht.

9. Kompositmaterial nach Anspruch 8, bei dem das zweite Metalloxid von 1 bis 5 Gew.-% des gesamten Kompositmaterials ausmacht.

10. Kompositmaterial nach Anspruch 1, bei dem das erste Metalloxid MgO und das zweite Metalloxid Fe₂O₃ ist.

11. Kompositmaterial nach Anspruch 1, bei dem das zweite Metalloxid als dünne Schicht aufgebracht ist, die eine Dicke von bis zu 1 nm aufweist.

12. Kompositmaterial nach Anspruch 1, bei dem das zweite Metalloxid im Wesentlichen aus Fe₂O₃ besteht.

13. Verfahren zur Zerstörung unerwünschter Fluide in einem Fluidstrom, das den Schritt des Kontaktierens des Fluidstroms mit einer Menge eines Kompositmaterials umfasst, welches Partikel eines ersten Metalloxids enthält, das aus der aus MgO, CaO, Al₂O₃, SnO₂, TiO₂ und Mischungen davon bestehenden Gruppe ausgewählt ist, wobei die Partikel zumindest teilweise mit einer Menge eines zweiten Metalloxids beschichtet sind, das aus der aus Fe₂O₃, Cu₂O, CoO und Mischungen davon bestehenden Gruppe ausgewählt ist, wobei das Komposit eine durchschnittliche Partikelgröße von bis zu 21 nm und eine durchschnittliche Oberfläche von mindestens 100 m²/g aufweist.

14. Verfahren nach Anspruch 13, bei dem das unerwünschte Fluid aus der aus Chlorkohlenstoffen, Chlorkohlenwasserstoffen, Chlorfluorkohlenstoffen, Chlorfluorkohlenwasserstoffen, toxischen Heteroatomverbindungen und Mischungen davon bestehenden Gruppe ausgewählt ist.

15. Verfahren nach Anspruch 13, bei dem die Konzentration des unerwünschten Gases von 0,30 g bis 1,3 g pro g des Kompositmaterials beträgt.

16. Verfahren nach Anspruch 13, das den Schritt des Erhitzens des Kompositmaterials vor dem Kontaktierungsschritt umfasst.

17. Verfahren nach Anspruch 16, bei dem das Kompositmaterial auf eine Temperatur von mindestens 100 °C erhitzt wird.

18. Verfahren nach Anspruch 13, bei dem der Kontaktierungsschritt den Schritt des Leitens des Fluidstroms durch eine Filtervorrichtung umfasst, wobei die Filtervorrichtung das Kompositmaterial darin einschließt.

19. Verfahren nach Anspruch 13, bei dem die Partikel eine durchschnittliche Größe von bis zu 20 nm aufweisen.

20. Verfahren nach Anspruch 19, bei dem die durchschnittliche Größe von 4 bis 10 nm beträgt.

21. Verfahren nach Anspruch 13, bei dem die durchschnittliche Oberfläche von 300 bis 500 m²/g beträgt.

22. Verfahren nach Anspruch 13, bei dem das erste Metalloxid von 90 bis 99 Gew.-% des gesamten Kompositmaterials ausmacht.

23. Verfahren nach Anspruch 22, bei dem das erste Metalloxid von 95 bis 99 Gew.-% des gesamten Kompositmaterials ausmacht.

24. Verfahren nach Anspruch 13, bei dem das zweite Metalloxid von 1 bis 10 Gew.-% des gesamten Kompositmaterials ausmacht.

25. Verfahren nach Anspruch 24, bei dem das zweite Metalloxid von 1 bis 5 Gew.-% des gesamten Kompositmaterials ausmacht.

26. Verfahren nach Anspruch 13, bei dem das erste Metalloxid MgO und das zweite Metalloxid Fe₂O₃ ist.

27. Verfahren nach Anspruch 13, bei dem mindestens 75 % der Oberfläche der ersten Metalloxidpartikel mit dem zweiten Metalloxid beschichtet sind.

## Revendications

1. Matériau composite comprenant des particules d'un premier oxyde métallique choisi dans le groupe constitué par MgO, CaO, Al₂O₃, SnO₂, TiO₂ et leurs mélanges, lesdites particules étant au moins partiellement revêtues par une certaine quantité d'un second oxyde métallique choisi dans le groupe constitué par Fe₂O₃, Cu₂O, CoO et leurs mélanges, ledit composite ayant une taille moyenne de particules allant jusqu'à 21 nm et une surface spécifique moyenne égale à au moins 100 m²/g.

2. Matériau composite selon la revendication 1, lesdites particules ayant une taille moyenne allant jusqu'à 20 nm.

3. Matériau composite selon la revendication 2, ladite taille moyenne étant comprise entre 4 et 10 nm.

4. Matériau composite selon la revendication 1, dans lequel au moins 75% de la surface spécifique desdites particules du premier oxyde métallique est revêtu avec le second oxyde métallique.

5. Matériau composite selon la revendication 1, ladite surface spécifique moyenne étant comprise entre 300 et 500 m²/g.

6. Matériau composite selon la revendication 1, ledit premier oxyde métallique constituant de 90 à 99% en masse de la totalité du matériau composite.

7. Matériau composite selon la revendication 6, ledit premier oxyde métallique constituant de 95 à 99% en masse de la totalité du matériau composite.

8. Matériau composite selon la revendication 1, ledit second oxyde métallique constituant de 1 à 10% en masse de la totalité du matériau composite.

9. Matériau composite selon la revendication 8, ledit second oxyde métallique constituant de 1 à 5% en masse de la totalité du matériau composite.

10. Matériau composite selon la revendication 1, ledit premier oxyde métallique étant MgO et ledit second oxyde métallique étant Fe₂O₃.

11. Matériau composite selon la revendication 1, ledit second oxyde métallique étant appliqué sous forme d'une couche mince ayant une épaisseur allant jusqu'à 1 nm.

12. Matériau composite selon la revendication 1, ledit second oxyde métallique étant constitué essentiellement de Fe₂O₃.

13. Procédé pour détruire les fluides indésirables dans un courant de fluide, comprenant l'étape consistant à mettre en contact ledit courant de fluide avec une quantité d'un matériau composite comprenant des particules d'un premier oxyde métallique choisi dans le groupe constitué par MgO, CaO, Al₂O₃, SnO₂, TiO₂ et leurs mélanges, lesdites particules étant au moins partiellement revêtues par une certaine quantité d'un second oxyde métallique choisi dans le groupe constitué par Fe₂O₃, Cu₂O, CoO et leurs mélanges, ledit composite ayant une taille moyenne de particules allant jusqu'à 21 nm et une surface spécifique moyenne égale à au moins 100 m²/g.

14. Procédé selon la revendication 13, ledit fluide indésirable étant choisi dans le groupe constitué par les hydrocarbures chlorés, les hydrocarbures chlorofluorés, les composés toxiques contenant des hétéroatomes et leurs mélanges.

15. Procédé selon la revendication 13, la concentration en lesdits gaz indésirables étant comprise entre 0,30 g et 1,3 g pour chaque gramme dudit matériau composite.

16. Procédé selon la revendication 13, comprenant l'étape de chauffage dudit matériau composite avant ladite étape de mise en contact.

17. Procédé selon la revendication 16, dans lequel ledit matériau composite est chauffé à une température égale à au moins 100°C.

18. Procédé selon la revendication 13, ladite étape de mise en contact comprenant une étape de passage dudit courant de fluide à travers un dispositif de filtration, ledit dispositif de filtration contenant à l'intérieur ledit matériau composite.

19. Procédé selon la revendication 13, lesdites particules ayant une taille moyenne allant jusqu'à 20 nm.

20. Procédé selon la revendication 19, ladite taille moyenne étant comprise entre 4 et 10 nm.

21. Procédé selon la revendication 13, ladite surface spécifique moyenne étant comprise entre 300 et 500 m²/g.

22. Procédé selon la revendication 13, ledit premier oxyde métallique constituant de 90 à 99% en masse de la totalité du matériau composite.

23. Procédé selon la revendication 22, ledit premier oxyde métallique constituant de 95 à 99% en masse de la totalité du matériau composite.

24. Procédé selon la revendication 13, ledit second oxyde métallique constituant de 1 à 10% en masse de la totalité du matériau composite.

25. Procédé selon la revendication 24, ledit second oxyde métallique constituant de 1 à 5% en masse de la totalité du matériau composite.

26. Procédé selon la revendication 13, ledit premier oxyde métallique étant MgO et ledit second oxyde métallique étant Fe₂O₃.

27. Procédé selon la revendication 13, dans lequel au moins 75% de la surface spécifique desdites particules du premier oxyde métallique est revêtu avec le second oxyde métallique.
